# EUROPÄISCHE PATENTSCHRIFT

(11) **EP 3 264 213 B1**
(45) Veröffentlichungstag und Bekanntmachung des Hinweises auf die Patenterteilung: **09.12.2020**
(21) Anmeldenummer: 17177302.1
(22) Anmeldetag: 22.06.2017
(51) Int. Cl.: G05D 1/02, B62D 15/02, B60M 1/12, B60L 5/36, B60L 5/26

(54) **KRAFTFAHRZEUG, SYSTEM UND VERFAHREN ZUM BETRIEB SOLCH EINES KRAFTFAHRZEUGS UND SOLCH EINES SYSTEMS**
MOTOR VEHICLE, SYSTEM AND METHOD FOR OPERATING SUCH A MOTOR VEHICLE AND SUCH A SYSTEM
VÉHICULE AUTOMOBILE, SYSTÈME ET PROCÉDÉ DE FONCTIONNEMENT D'UN TEL VÉHICULE AUTOMOBILE ET UN TEL SYSTÈME

(30) Priorität: 30.06.2016 DE 102016211855
(43) Veröffentlichungstag der Anmeldung: 03.01.2018
(73) Patentinhaber: Siemens Mobility GmbH, 81739 München (DE)
(72) Erfinder: Gräbner, Oliver, 85579 Neubiberg (DE); Bühs, Florian, 10777 Berlin (DE)

(56) Entgegenhaltungen:
- DE-A1-102012 205 276
- US-A1- 2013 261 868
- US-A1- 2014 097 054

## Beschreibung

Die Erfindung betrifft ein Kraftfahrzeug gemäß Patentanspruch 1, ein System gemäß Patenanspruch 7 und ein Verfahren zum Betrieb solch eines Kraftfahrzeugs gemäß Patenanspruch 9.

Es ist ein Kraftfahrzeug mit einer Kamera, einer Ortsbestimmungseinrichtung und einem Steuergerät bekannt, wobei die Kamera ein Videobild eines vor dem Fahrzeug befindlichen Abschnitts einer Fahrbahn aufnimmt, die Ortsbestimmungseinrichtung eine Ortsposition auf Grundlage von Satelliteninformationen bestimmt und das Steuergerät auf Grundlage einer Mustererkennung des durch die Kamera aufgenommenen Videobilds Fahrbahnmarkierungen erkennt und somit eine Ortsposition der Ortsbestimmungseinrichtung für eine Kraftfahrzeugposition verifiziert. Aufgrund von schlechten Wetterverhältnissen kann die Fahrbahnmarkierung schlecht durch Musterverfahren detektiert werden. Insbesondere bei Schneefall und schneebedeckter Fahrbahn kann die Fahrbahnmarkierung nicht erfasst werden.

Aus DE 10 2012 205 276 A1 ist ein nicht schienengebundenes Fahrzeug bekannt, das einen Stromabnehmer zur Einspeisung elektrischer Energie aus einer entlang einer Fahrspur angeordneten, zweipoligen Oberleitung mit als Hin- und Rückleiter ausgebildeten Fahrdrähten aufweist. Dabei weist der Stromabnehmer je Fahrdraht mindestens eine Schleifleiste mit einem Arbeitsbereich zur Kontaktierung der Fahrdrähte auf. Das Fahrzeug umfasst ferner Erfassungsmittel zur Erfassung der Relativlage des Stromabnehmers zu den Fahrdrähten. Außerdem umfasst das Fahrzeug ein Lenkassistenzsystem zur automatischen Lenkung des Fahrzeugs in Abhängigkeit der erfassten Relativlage.

Ferner ist aus der US 2014/097054 A1 ein nicht-schienengebundenes Fahrzeug bekannt. Das nicht-schienengebundene Fahrzeug umfasst einen Stromabnehmer zur Einspeisung elektrischer Energie aus einer zweipoligen Oberleitung, deren als Hin- und Rückleiter ausgebildete Fahrdrähte jeweils durch mindestens eine Schleifleiste des Stromabnehmers kontaktierbar sind. Indem der Stromabnehmer zwei Tragausleger aufweist, die jeweils am Fahrzeug und an einer die Schleifleisten tragenden Wippe derart kipp- und schwenkbar angelenkt sind, dass die Wippe sowohl anhebbar und absenkbar als auch quer zur Fahrtrichtung bewegbar ist, ist der Stromabnehmer auch bei höheren Fahrgeschwindigkeiten des Fahrzeugs sicher an die Fahrdrähte an- und davon abkoppelbar. Außerdem können seitliche Ungenauigkeiten beim Lenken des Fahrzeugs bezüglich der Fahrspur permanent vom Stromabnehmer ausgeglichen werden.

Ferner ist aus der US 2013/261868 A1 und der
DE 11 2013 001 814 T5 ein System zum automatischen Führen eines geländegängigen Lastkraftwagens an einem Arbeitsbereich bekannt, wobei der Arbeitsbereich einen Oberleitungsdraht zum Zuführen von elektrischer Energie zu dem geländegängigen Lastkraftwagen umfasst, wobei der Oberleitungsdraht entlang eines Fahrwegs verläuft, der zwei oder mehr Merkmale am Fahrwegrand aufweist, wobei das System umfasst: einen Oberleitungsstromabnehmer zum selektiven Kontaktieren des Oberleitungsdrahts, einen oder mehrere Sensoren, die dem geländegängigen Lastkraftwagen zugeordnet sind, und eine Steuereinrichtung, die mit dem einen oder den mehreren Sensoren und einer Maschinenlenkungssteuerung verbunden und so ausgebildet ist, dass sie eine Position des geländegängigen Lastkraftwagens bezogen auf den Oberleitungsdraht durch Erfassen der zwei oder mehr Merkmale am Fahrwegrand erfasst und den Lastkraftwagen über die Maschinenlenkungssteuerung automatisch so lenkt, dass der Oberleitungsstromabnehmer mit dem Oberleitungsdraht in Kontakt gehalten wird.

Es ist Aufgabe der Erfindung, ein verbessertes Kraftfahrzeug, ein verbessertes System und ein verbessertes Verfahren zum Betrieb solch eines Kraftfahrzeugs und solch eines Systems bereitzustellen.

Diese Aufgabe wird mittels eines Kraftfahrzeugs gemäß Patentanspruch 1, eines Systems gemäß Patentanspruch 7 und eines Verfahrens gemäß Patentanspruch 9 gelöst. Vorteilhafte Ausführungsformen sind in den abhängigen Ansprüchen angegeben.

Erfindungsgemäß wurde erkannt, dass ein verbessertes Kraftfahrzeug dadurch bereitgestellt werden kann, dass das Kraftfahrzeug ein Steuergerät, einen ersten Sensor und eine Ortsbestimmungseinrichtung aufweist, wobei das Steuergerät eine Steuereinrichtung und einen Datenspeicher umfasst, wobei in dem Datenspeicher wenigstens eine Information über eine Anordnung einer Fahrleitung abgelegt ist, wobei die Steuereinrichtung mit dem ersten Sensor und mit der Ortsbestimmungseinrichtung verbunden ist, wobei der erste Sensor eine Relativposition der Fahrleitung zu dem Kraftfahrzeug bestimmt und die Relativposition der Steuereinrichtung bereitstellt, wobei die Ortsbestimmungseinrichtung eine Ortsposition des Kraftfahrzeugs bestimmt und der Steuereinrichtung bereitstellt. Die Steuereinrichtung ermittelt auf Grundlage der ermittelten Relativposition, der ermittelten Ortsposition und der Information über die Anordnung der Fahrleitung eine Kraftfahrzeugposition.

Diese Ausgestaltung hat den Vorteil, dass wetterunabhängig, insbesondere bei schneebedeckter Fahrbahn, die Kraftfahrzeugposition zuverlässig und genau bestimmt werden kann.

In einer weiteren Ausführungsform umfasst das Kraftfahrzeug einen mit der Steuereinrichtung verbundenen zweiten Sensor, wobei der zweite Sensor eine Trajektorie des Kraftfahrzeugs ermittelt und die ermittelte Trajektorie der Steuereinrichtung bereitstellt. Die Steuereinrichtung ermittelt auf Grundlage der Kraftfahrzeugposition und der Anordnung der Fahrleitung einen Fahrkanal. Die Steuereinrichtung vergleicht den Fahrkanal mit der Trajektorie in einem Vergleich. In Abhängigkeit des Ergebnisses des Vergleichs stellt die Steuereinrichtung ein Steuersignal bereit. Auf diese Weise kann zuverlässig das Kraftfahrzeug mittels des Steuersignals gesteuert werden.

In einer weiteren Ausführungsform weist das Kraftfahrzeug eine Anzeigeeinrichtung auf, wobei die Anzeigeeinrichtung mit der Steuereinrichtung verbunden ist, wobei die Steuereinrichtung mittels des Steuersignals die Anzeigeeinrichtung derart ansteuert, dass die Anzeigeeinrichtung eine Fahrrichtung für einen Fahrzeugführer des Kraftfahrzeugs anzeigt. Auf diese Weise kann der Fahrzeugführer zuverlässig unterhalb der Fahrleitung das Kraftfahrzeug zuverlässig führen, ohne dass der Fahrzeugführer konzentriert sowohl auf die Fahrbahn als auch auf die Fahrleitung blicken muss.

In einer weiteren Ausführungsform weist das Kraftfahrzeug einen Stromabnehmer mit wenigstens einer Schleifleiste, wenigstens einem Aktor und einer Tragestruktur auf, wobei der Aktor mit der Tragestruktur gekoppelt ist, wobei die Tragestruktur die Schleifleiste trägt und ausgebildet ist, die Schleifleiste in Berührkontakt mit der Fahrleitung zu bringen, wobei der Aktor mit der Steuereinrichtung verbunden ist, wobei der Aktor mit der Tragestruktur mechanisch gekoppelt und ausgebildet ist, eine Schleifleistenposition zu verändern. Die Steuereinrichtung ist ausgebildet, auf Grundlage der Trajektorie und der Kraftfahrzeugposition einen Schleifleistenbereich zu ermitteln. Die Steuereinrichtung ist ausgebildet, auf Grundlage des Schleifleistenbereichs und der Information der Anordnung der Fahrleitung den Aktor mittels eines weiteren Steuersignals derart zu steuern, dass die Schleifleiste im Schleifleistenbereich angeordnet ist. Dadurch kann ein zuverlässiger Kontakt der Schleifleiste an der Fahrleitung sichergestellt werden. Gleichzeitig wird vermieden, dass der Aktor hohe Beschleunigungen durchführen muss, um einen Kontakt der Schleifleiste an der Fahrleitung sicherzustellen. Dadurch kann eine Regelstrecke des Aktors träge ausgebildet sein.

In einer weiteren Ausführungsform berücksichtigt die Steuereinrichtung bei der Ermittlung des weiteren Steuersignals für den Aktor das Ergebnis des Vergleichs.

In einer weiteren Ausführungsform berücksichtigt die Steuereinrichtung eine Breite der Schleifleiste und/oder eine Breite eines Schwenkbereichs der Schleifleiste quer zu einer Fahrzeuglängsachse bei der Ermittlung des Fahrkanals.

In einer weiteren Ausführungsform weist das Kraftfahrzeug eine Datenschnittstelle auf, wobei die Datenschnittstelle mit der Steuereinrichtung verbunden ist und mit einem Zentralrechner verbindbar ist. Die Steuereinrichtung ist ausbildet, eine erste Information des ersten Sensors in Verbindung mit einer zweiten Information über eine Ortsposition des Kraftfahrzeugs im Datenspeicher abzuspeichern, wobei die Steuereinrichtung ausgebildet ist, nach einem vordefinierten Zeitintervall ein Datensignal mit der ersten Information in Verbindung mit der zweiten Information an die Datenschnittstelle bereitzustellen.

In einer weiteren Ausführungsform ist die Datenschnittstelle ausgebildet, ein Zentralrechnerdatensignal eines Zentralrechners zu erfassen, wobei die Datenschnittstelle ausgebildet ist, das Zentralrechnerdatensignal der Steuereinrichtung bereitzustellen, wobei das Zentralrechnerdatensignal eine weitere Information über eine aktualisierte Anordnung der Fahrleitung aufweist, wobei die Steuereinrichtung ausgebildet ist, die im Datenspeicher abgelegte Information über die Anordnung der Fahrleitung durch die weitere Information über die aktualisierte Anordnung der Fahrleitung zu ersetzten und/oder zu ergänzen. Dies hat den Vorteil, dass die Kraftfahrzeugposition immer auf den aktuellen Informationen der Anordnung der Fahrleitung basierend errechnet wird. Dadurch können die Kraftfahrzeugposition besonders präzise werden und Fehlbestimmungen der Kraftfahrzeugposition vermieden werden. In einer weiteren Ausführungsform weist das System ein erstes Kraftfahrzeug, wenigstens ein zweites Kraftfahrzeug und einen Zentralrechner auf. Das erste Kraftfahrzeug und das zweite Kraftfahrzeug sind wie oben beschrieben ausgebildet. Der Zentralrechner umfasst eine Zentralrechnerdatenschnittstelle, eine Zentralrecheneinrichtung und einen Zentraldatenspeicher. Der Zentraldatenspeicher ist mit der Zentralrecheneinrichtung und die Zentralrechnerdatenschnittstelle ist mit der Zentralrecheneinrichtung verbunden. Im Zentraldatenspeicher ist ein vordefinierter Parameter abgelegt, wobei die Zentralrechnerdatenschnittstelle mittels eines Datensignals mit der Datenschnittstelle des ersten Kraftfahrzeugs und/oder mittels eines weiteren Datensignals mit der Datenschnittstelle des zweiten Kraftfahrzeugs verbunden ist. Das Datensignal des ersten Kraftfahrzeugs stellt die erste Information des ersten Sensors des ersten Kraftfahrzeugs in Verbindung mit der zweiten Information über die Ortsposition des ersten Kraftfahrzeugs und das weitere Datensignal des zweiten Kraftfahrzeugs die erste Information des ersten Sensors des zweiten Kraftfahrzeugs in Verbindung mit der zweiten Information über die Ortsposition des zweiten Kraftfahrzeugs bereit. Die Zentraldatenschnittstelle ist ausgebildet, das Datensignal des ersten Kraftfahrzeugs und des zweiten Kraftfahrzeugs zu erfassen und der Zentralrecheneinrichtung bereitzustellen, wobei die Zentralrecheneinrichtung ausgebildet ist, auf Grundlage der ersten Information und der zweiten Information des ersten Kraftfahrzeugs und der ersten Information und der zweiten Information des zweiten Kraftfahrzeugs sowie des vordefinierten Parameters eine Information über eine aktualisierte Anordnung der Fahrleitung zu errechnen. Dadurch kann, insbesondere automatisch nach Reparaturarbeiten der Fahrleitung, die neu angeordnete Fahrleitung aktualisiert werden.

In einer weiteren Ausführungsform ist die Zentralrechnerdatenschnittstelle ausgebildet, ein Zentraldatensignal mit der Information über die aktualisierte Anordnung der Fahrleitung bereitzustellen, wobei die Datenschnittstelle des ersten Kraftfahrzeugs und/oder des zweiten Kraftfahrzeugs ausgebildet ist, das Zentraldatensignal zu erfassen.

In einer weiteren Ausführungsform bestimmt der erste Sensor eine Relativposition der Fahrleitung zu dem Kraftfahrzeug und stellt der Steuereinrichtung die Relativposition bereit, wobei die Ortsbestimmungseinrichtung eine Ortsposition des Kraftfahrzeugs bestimmt und die Ortsposition der Steuereinrichtung bereitstellt, wobei die Steuereinrichtung auf Grundlage der ermittelten Relativposition, der ermittelten Ortsposition und der Information über die Anordnung der Fahrleitung eine Kraftfahrzeugposition errechnet.

In einer weiteren Ausführungsform ermittelt der zweite Sensor eine Trajektorie des Kraftfahrzeugs und stellt die Trajektorie der Steuereinrichtung bereit, wobei die Steuereinrichtung auf Grundlage der Kraftfahrzeugposition und der Anordnung der Fahrleitung einen Fahrkanal errechnet, wobei die Steuereinrichtung den Fahrkanal mit der Trajektorie in einem Vergleich vergleicht, wobei in Abhängigkeit des Ergebnisses des Vergleichs ein Steuersignal bereitstellt wird.

In einer weiteren Ausführungsform steuert die Steuereinrichtung mittels des Steuersignals die Anzeigeeinrichtung derart an, dass die Anzeigeeinrichtung eine Fahrrichtung für einen Fahrzeugführer des Kraftfahrzeugs anzeigt. Auf diese Weise kann ein Verlassen des vorgegebenen Fahrkanals vermieden werden.

In einer weiteren Ausführungsform wird die Zentralrechnerdatenschnittstelle mittels eines Datensignals mit der Datenschnittstelle des ersten Kraftfahrzeugs und/oder mittels eines weiteren Datensignals mit der Datenschnittstelle des zweiten Kraftfahrzeugs verbunden, wobei die Zentraldatenschnittstelle das Datensignal des ersten Kraftfahrzeugs und des zweiten Kraftfahrzeugs erfasst und der Zentralrecheneinrichtung bereitstellt, wobei die Zentralrecheneinrichtung auf Grundlage der ersten Information und der zweiten Information des ersten Kraftfahrzeugs und der ersten Information und der zweiten Information des zweiten Kraftfahrzeugs sowie des vordefinierten Parameters eine Information über eine aktualisierte Anordnung der Fahrleitung errechnet.

Nachfolgend wird die Erfindung anhand von Figuren näher erläutert, wobei
- FIG 1: eine perspektivische Darstellung eines Systems 10;
- FIG 2: eine Draufsicht auf das in FIG 1 gezeigte System;
- FIG 3: ein Ablaufdiagramm eines Verfahrens gemäß einer ersten Ausführungsform zum Betrieb eines Kraftfahrzeugs des in FIG 1 und 2 gezeigten Systems;
- FIG 4: eine Draufsicht auf das in FIG 1 gezeigte System;
- FIG 5: ein Ablaufdiagramm eines Verfahrens gemäß einer zweiten Ausführungsform zum Betrieb eines Kraftfahrzeugs des in FIG 4 gezeigten Systems;
- FIG 6: ein Ablaufdiagramm eines Verfahrens gemäß einer dritten Ausführungsform zum Betrieb des in FIG 7 gezeigten Systems;
- FIG 7: eine Draufsicht auf eine Variante des in FIG 1 gezeigten Systems;
zeigen.

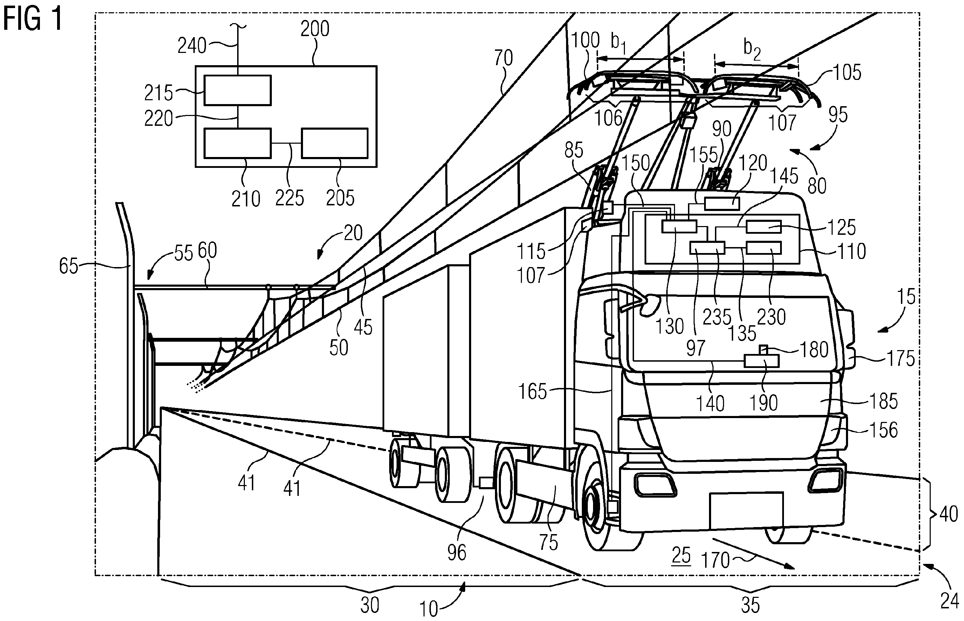

FIG 1 zeigt eine perspektivische Darstellung eines Systems 10.

Das System 10 weist beispielhaft wenigstens ein Kraftfahrzeug 15, eine elektrische Energieversorgung 20 und eine Straße 24 mit einer Fahrbahn 25. Das Kraftfahrzeug 15 ist ausgebildet, auf der Fahrbahn 25 zu fahren. Das Kraftfahrzeug 15 kann beispielsweise ein Nutzfahrzeug, insbesondere ein Lastkraftwagen, eine Personenkraftwagen oder ein Autobus sein.

Die Straße 24 weist in der Ausführungsform beispielhaft eine Standspur 30, eine erste Fahrspur 35 und beispielhaft eine zweite Fahrspur 40 auf. Die erste Fahrspur 35 und die zweite Fahrspur 40 weisen die gleiche Fahrrichtung auf. Die Fahrbahn 25 weist zur Abtrennung der Standspur 30, der ersten Fahrspur 35 und der zweiten Fahrspur 40 Fahrbahnmarkierungen 41 auf, die beispielsweise als durchgezogene Linie oder als strichlierte Linie ausgebildet sein können.

Die Straße 24 kann aber auch andersartig ausgebildet sein. So kann beispielsweise auf die Standspur 30 verzichtet werden und/oder nur eine der Fahrspuren 35, 40 vorgesehen sein. Auch kann die Anzahl der Fahrspuren 35, 40 andersartig als in FIG 1 gezeigt gewählt sein.

Das Kraftfahrzeug 15 fährt beispielhaft auf der ersten Fahrspur 35. Alternativ kann das Kraftfahrzeug 15 auch auf der zweiten Fahrspur 40 oder, beispielsweise bei einem Ausscheren, auf der ersten Fahrspur 35 und der zweiten Fahrspur 40 oder auf der ersten Fahrspur 35 und der Standspur 30 fahren.

Die elektrische Energieversorgung 20 ist ortsfest. Die elektrische Energieversorgung 20 weist eine erste Fahrleitung 45 und eine zweite Fahrleitung 50 auf. Die erste Fahrleitung 45 und die zweite Fahrleitung 50 sind im Wesentlichen parallel zueinander verlaufend in einer Ebene, die im Wesentlichen parallel zur Fahrbahn 25 verläuft, angeordnet. Auch kann die erste Fahrleitung 45 unterhalb der zweiten Fahrleitung 50 angeordnet sein.

Die Fahrleitung 45, 50 wird mittels einer stationären Halteeinrichtung 55, die beispielsweise einen Ausleger 60 und einen den Ausleger 60 tragenden Mast 65 aufweist, beispielhaft oberhalb der ersten Fahrspur 35 getragen. Die Halteeinrichtungen 55 sind entlang der Fahrbahn 25 beabstandet zueinander angeordnet. Zwischen den einzelnen Halteeinrichtungen 55 ist die Fahrleitung 45, 50 geradlinig verlaufend angeordnet. Die Fahrleitung 45, 50 ist mit einer zentralen Energieversorgung (nicht dargestellt) elektrisch verbunden. Dabei kann beispielhaft die erste Fahrleitung 45 als Hinleiter und die zweite Fahrleitung 50 als Rückleiter ausgebildet sein. Um die Fahrleitung 45, 50 im Wesentlichen parallel zu der Fahrbahn 25 zu tragen, kann zusätzlich oberhalb jeweils einer Fahrleitung 45, 50 ein Tragseil 70 vorgesehen sein, das an dem Ausleger 60 befestigt ist und die Fahrleitung 45, 50 trägt.

Das Kraftfahrzeug 15 weist eine Antriebseinrichtung 75 auf. Die Antriebseinrichtung 75 ist beispielhaft als Hybridantrieb ausgebildet sein. Auch kann die Antriebseinrichtung 75 nur einen elektrischer Antrieb oder nur eine Brennkraftmaschine umfassen.

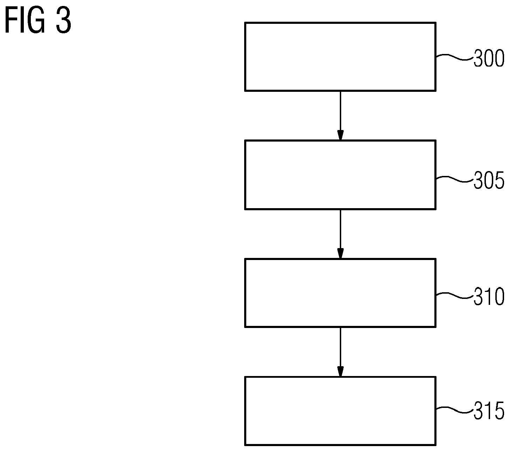

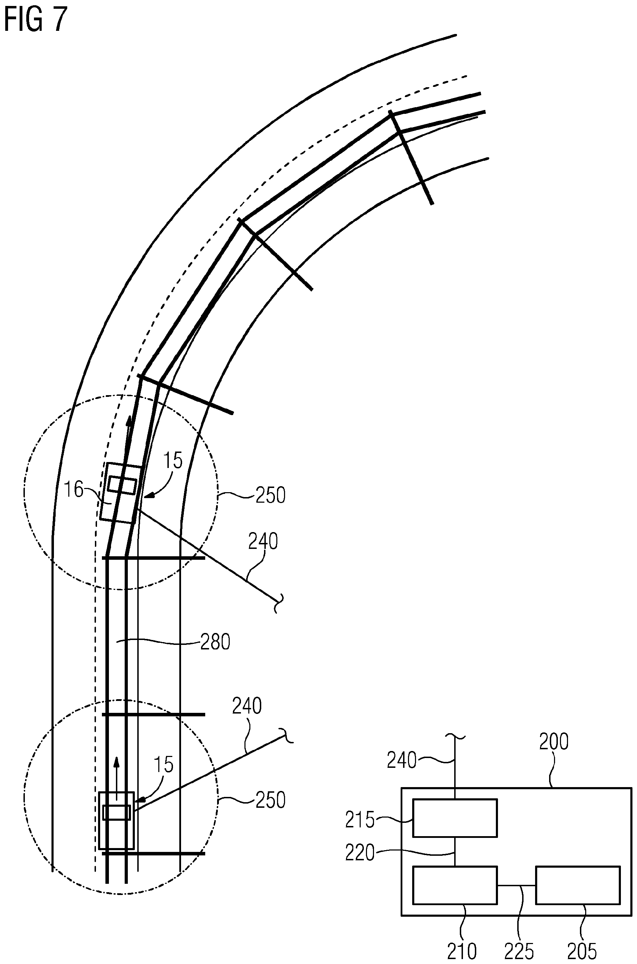

Die Antriebseinrichtung 75 umfasst beispielsweise einen Stromabnehmer 80. Auf den Stromabnehmer 80 kann insbesondere für das in FIGN 3 und 7 beschrieben Verfahren verzichtet werden.

Der Stromabnehmer 80 ist in der Ausführungsform beispielhaft hinter dem Führerhaus auf der Tragkonstruktion des Kraftfahrzeugs 15 angeordnet. Der Stromabnehmer 80 weist wenigstens einen Aktor 85, 90, eine Tragestruktur 95 und wenigstens je eine Schleifleiste 100, 105 auf. Die Tragestruktur 95 ist mechanisch mit einer Fahrzeugstruktur 96 des Kraftfahrzeugs 15 an einer Seite und an einer anderen Seite mit der Schleifleiste 100, 105 verbunden.

In der Ausführungsform ist für jede Fahrleitung 45, 50 jeweils eine Schleifleiste 100, 105 vorgesehen. Die Schleifleiste 100, 105 ist elektrisch mit der elektrischen Maschine der Antriebseinrichtung 75 schaltbar verbunden. Die Schleifleiste 100, 105 wird durch die Tragestruktur 95 unterseitig in angebügeltem Zustand an die Fahrleitung 45, 50 gepresst. Durch das Entlangschleifen der Schleifleiste 100, 105 wird die Fahrleitung 45, 50 unterseitig abgenutzt und bildet eine spiegelartige Fläche an der Fahrleitung 45, 50 aus, durch die Fahrleitung 45, 50 in Fahrrichtung nach vorne schwer zu detektieren ist.

Der Aktor 85, 90 ist mit der Tragestruktur 95 mechanisch gekoppelt und stützt sich beispielsweise an der Fahrzeugstruktur 96 ab. Der Aktor 85, 90 dient dazu, eine Schleifleistenposition der Schleifleiste 100, 105 relativ zur Fahrleitung 45, 50 und zum Kraftfahrzeug 15 zu verändern. Insbesondere dient der Aktor 85, 90 dazu, die Schleifleiste 100, 105 anzubügeln, d. h. die jeweilige Schleifleiste 100, 105 an die zugeordnete Fahrleitung 45, 50 in Berührkontakt zu bringen. Auch kann der Aktor 85, 90 den Stromabnehmer 80 abbügeln, d. h. die Schleifleiste 100, 105 von der Fahrleitung 45, 50 mechanisch trennen.

Je nach Ausgestaltung der Tragestruktur 95 kann der Aktor 85, 90 die Schleifleistenposition auch in Querrichtung zur Fahrzeuglängsrichtung verändern.

Der Aktor 85, 90 kann jeweils ein oder mehrere Aktorelemente aufweisen, wobei jedes der Aktorelemente ausgebildet ist, die Schleifleiste 100, 105 in eine Richtung zu bewegen. So kann der Aktor 85, 90 beispielsweise jeweils zum An- und Abbügeln ein erstes Aktorelement und zum Bewegen der Schleifleiste 100, 105 in Querrichtung quer zur Fahrzeuglängsrichtung ein zweites Aktorelement aufweisen. Das erste und zweite Aktorelement können dabei unabhängig voneinander angesteuert werden. Auch können die Aktorelemente unterschiedlich zueinander ausgebildet sein. So kann beispielsweise das erste Aktorelement pneumatisch angetrieben werden und das zweite Aktorelement einen elektrischen Servomotor als Antrieb aufweisen.

Ferner weist das Kraftfahrzeug eine Regelstrecke 97 zur Positionierung der Schleifleiste 100, 105 relativ zur Fahrleitung 45, 50 auf. Die Regelstrecke 97 steuert den Aktor 85, 90 an.

Die erste Schleifleiste 100 weist einen ersten Kontaktbereich 106 und die zweite Schleifleiste 105 einen zweiten Kontaktbereich 107 auf. Im Kontaktbereich 106, 107 stellt die Schleifleiste 100, 105 im angebügelten Zustand eine zuverlässige elektrische Verbindung zu der jeweils der Schleifleiste 100, 105 zugeordneten Fahrleitung 45, 50 bereit. Der erste Kontaktbereich 106 weist eine erste Kontaktbreite b₁ und der zweite Kontaktbereich 107 eine zweite Kontaktbreite b₂ auf. Die Kontaktbreite b₁, b₂ erstreckt sich quer zur Fahrzeuglängsrichtung.

Das Kraftfahrzeug 15 umfasst ferner ein Steuergerät 110, einen ersten Sensor 115 und eine Ortsbestimmungseinrichtung 120.

Das Steuergerät 110 umfasst einen Datenspeicher 125, eine Schnittstelle 130 und eine Steuereinrichtung 135.

Die Steuereinrichtung 135 ist mittels einer ersten Verbindung 140 mit der Schnittstelle 130 verbunden. Der Datenspeicher 125 ist mit der Steuereinrichtung 135 mittels einer zweiten Verbindung 145 verbunden. Im Datenspeicher 125 ist wenigstens eine Information der Anordnung der Fahrleitung 45, 50 und der Fahrbahn 25, beispielsweise als topographische Karte, abgelegt. Dabei kann beispielsweise der Anordnung der Fahrleitung 45, 50 an den Halteeinrichtungen vordefinierte Koordinaten zugewiesen sein, die mit mittels dem geradlinigen Verlauf der Fahrleitung 45, 50 verknüpft sind. Zusätzlich kann zu der jeweiligen Koordinate die Ausgestaltung der Fahrbahn 25 im Datenspeicher 125 abgelegt sein.

Der erste Sensor 115 ist mittels einer dritten Verbindung 150 und die Ortsbestimmungseinrichtung 120 mittels einer vierten Verbindung 155 mit der Schnittstelle 130 verbunden.

Der erste Sensor 115 ist vorzugsweise an der Tragestruktur 95 angeordnet und beispielsweise von einer Kabine 156 des Kraftfahrzeugs 15 entkoppelt. Der erste Sensor 115 kann aber auch eine Sensoranordnung bestehend aus mehreren Sensoren sein. In der Ausführungsform ist der erste Sensor 115 als Laserscanner ausgebildet. Zusätzlich oder alternativ ist auch denkbar, dass der erste Sensor 115 als LiDAR-Sensor und/oder Radarsensor und/oder Bilderfassungseinrichtung ausgebildet ist.

Der erste Sensor 115 erfasst eine Relativposition der Fahrleitung 45, 50 zu dem ersten Sensor 115. Der erste Sensor 115 stellt die erfasste Relativposition der Steuereinrichtung 135 über die dritte Verbindung 150, die Schnittstelle 130 und die erste Verbindung 140 bereit. Die Steuereinrichtung 135 erfasst die Relativposition.

Die Ortsbestimmungseinrichtung 120 kann beispielsweise Teil eines Satellitennavigationssystems (beispielsweise GPS oder GLON ASS) sein und Datensignale von verschiedenen Satelliten erfassen und auf Grundlage der erfassten Datensignale eine Ortsposition 250 des Kraftfahrzeugs 15 errechnen. Die Ortsbestimmungseinrichtung 120 stellt über die vierte Verbindung 155 und der Schnittstelle 130 sowie der ersten Verbindung 140 die erfasste Ortsposition 250 der Steuereinrichtung 135 bereit. Die Steuereinrichtung 135 erfasst die Ortsposition.

Zusätzlich weist das Kraftfahrzeug 15 wenigstens einen zweiten Sensor 160 auf. Der zweite Sensor 160 ist mittels einer fünften Verbindung 165 mit der Schnittstelle 130 verbunden. Der zweite Sensor 160 kann dabei Teil eines Fahrerassistenzsystems und/oder eines Sicherheitssystems, insbesondere eines Airbagsystems, sein. Der zweite Sensor 160 kann aber auch eine Sensoranordnung bestehend aus mehreren Sensoren sein. Der zweite Sensor 160 kann dabei beispielsweise ein Beschleunigungssensor sein, der eine Beschleunigung des Kraftfahrzeugs 15 in wenigstens eine Raumrichtung, vorzugsweise wenigstens zwei Raumrichtungen, insbesondere alle Raumrichtungen erfasst. Zusätzlich oder alternativ kann der zweite Sensor 160 auch ein Geschwindigkeitssensorelement umfassen, das eine Geschwindigkeit des Kraftfahrzeugs 15 in wenigstens eine der Raumrichtungen erfasst. Der zweite Sensor 160 kann beispielsweise auch eine Information über eine Drehzahl der Räder des Kraftfahrzeugs 15 und/oder einen Lenkeinschlag erfassen.
Der zweite Sensor 160 ermittelt eine Trajektorie 170 des Kraftfahrzeugs 15 und stellt die ermittelte Trajektorie 170 über die fünfte Verbindung 165 und der Schnittstelle 130 sowie der ersten Verbindung 140 der Steuereinrichtung 135 bereit. Die Steuereinrichtung 135 erfasst die ermittelte Trajektorie 170.

Wird das Kraftfahrzeug 15 teilautonom oder mittels eines Fahrzeugführers gesteuert, so weist das Kraftfahrzeug 15 vorteilhafterweise eine Anzeigeeinrichtung 175 auf. Die Anzeigeeinrichtung 175 ist dabei in einem Sichtbereich des Fahrzeugführers des Kraftfahrzeugs 15 angeordnet.

Die Anzeigeneinrichtung 175 weist beispielsweise ein erstes optisches Anzeigeelement 180 und ein zweites optisches Anzeigeelement 185 auf, die beispielsweise in Querrichtung zur Fahrzeuglängsrichtung versetzt zueinander angeordnet sind. Die Anzeigeeinrichtung 175 ist mittels einer sechsten Verbindung 190 mit der Schnittstelle 130 des Steuergeräts 110 verbunden. Alternativ ist auch denkbar, dass die Anzeigeeinrichtung 175 ausgebildet ist, über ein haptisches erfassbares Signal, beispielsweise ein Vibrieren an einem Lenkrad und/oder über eine Krafteinwirkung am Lenkrad, dem Fahrzeugführer eine Lenkeinschlagsrichtung anzuzeigen.

Ist das Kraftfahrzeug 15 als autonomes Fahrzeug ausgebildet, so kann auf die Anzeigeeinrichtung 175 verzichtet werden. Alternativ kann in diesem Fall die sechste Verbindung 190 mit einem weiteren Steuergerät für einen autonomen Fahrbetrieb des Kraftfahrzeugs 15 verbunden sein.

Zusätzlich kann bei Vorsehen des Stromabnehmers 80 der Aktor 85, 90 jeweils mit einer siebten Verbindung 195 mit der Schnittstelle 130 verbunden sein.

Zusätzlich kann das System 10 einen Zentralrechner 200 aufweisen. Der Zentralrechner 200 weist einen Zentraldatenspeicher 205, eine Zentralrecheneinrichtung 210 und eine Zentralrechnerdatenschnittstelle 215 auf. Die Zentralrechnerdatenschnittstelle 215 ist mittels einer achten Verbindung 220 mit der Zentralrecheneinrichtung 210 verbunden. Ferner ist der Zentraldatenspeicher 205 mittels einer neunten Verbindung 225 mit der Zentralrecheneinrichtung 210 verbunden.

Im Zentraldatenspeicher 205 ist ein vordefinierter Parameter abgelegt. Der vordefinierte Parameter kann dabei ein Algorithmus, insbesondere ein SLAM-Algorithmus (Simultaneous Localization and Mapping) sein.

Zusätzlich kann das Steuergerät 110 zur Anbindung des Steuergeräts 110 an dem Zentralrechner 200 eine Datenschnittstelle 230 aufweisen, die mittels einer zehnten Verbindung 235 mit der Steuereinrichtung 135 verbunden ist.

Die Datenschnittstelle 230 ist zumindest temporär über eine Datenverbindung 240 mit der Zentralrechnerdatenschnittstelle 215 verbunden. Die Datenverbindung 240 ist vorzugsweise als drahtlose Verbindung ausgebildet und kann beispielsweise über ein Mobilfunknetz ausgebildet werden.

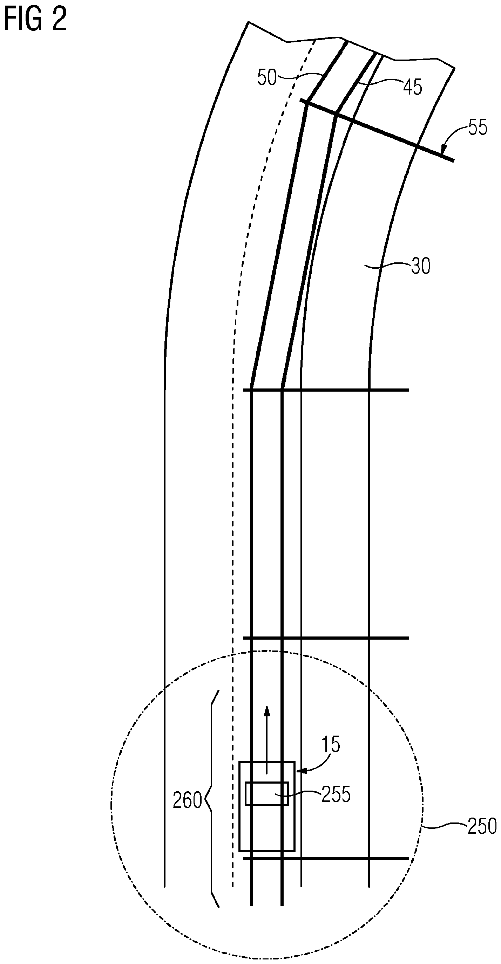

FIG 2 zeigt eine Draufsicht auf das in FIG 1 gezeigte System 10. FIG 3 zeigt ein Ablaufdiagramm eines Verfahrens zum Betrieb des in FIG 1 gezeigten Kraftfahrzeugs 15.

In einem ersten Verfahrensschritt 300 ermittelt die Ortsbestimmungseinrichtung 120 die Ortsposition 250 des Kraftfahrzeugs 15. Die Ortsposition 250 weist von einer Kraftfahrzeugposition 255 des Kraftfahrzeugs 15 ggf. eine Abweichung auf, die mittels der strichlierten Linie in FIG 2 symbolisiert ist. Die Abweichung der Ortsposition 250 zu der Kraftfahrzeugposition 255 des Kraftfahrzeugs 15 kann bis zu 30 Meter betragen.

Die ermittelte Ortsposition 250 stellt die Ortsbestimmungseinrichtung 120 der Steuereinrichtung 135 bereit. Die Steuereinrichtung 135 erfasst die Ortsposition 250. Ggf. legt die Steuereinrichtung 135 die Ortsposition 250 im Datenspeicher 125 zur Weiterverarbeitung ab.

In einem zweiten Verfahrensschritt 305, der auch zeitlich parallel zum ersten Verfahrensschritt 300 durchgeführt werden kann, ermittelt der erste Sensor 115 die Relativposition des ersten Sensors 115 zu der Fahrleitung 45, 50. Ist der erste Sensor 115, wie oben beschrieben, beispielhaft als Laserscanner ausgebildet, so tastet der erste Sensor 115 von unten im Wesentlichen quer zur Fahrzeuglängsrichtung die Anordnung der Fahrleitung 45, 50 relativ zum ersten Sensor 115 ab und ermittelt aufgrund der erfassten, von der Fahrleitung 45, 50 zurückreflektierten Strahlung des ersten Sensors 115 die Relativposition.

Die Relativposition stellt der erste Sensor 115 der Steuereinrichtung 135 bereit und die Steuereinrichtung 135 erfasst die Relativposition. Fakultativ legt die Steuereinrichtung 135 die erfasste Relativposition im Datenspeicher 125 des Steuergeräts 110 ab. Zusätzlich kann die ermittelte Relativposition mit einem Zeitstempel verknüpft und/oder mit einer zugeordneten Ortsposition im Datenspeicher 125 abgelegt werden.

In einem dritten Verfahrensschritt 310 errechnet die Steuereinrichtung 135 auf Grundlage der ermittelten Relativposition und der ermittelten Ortsposition 250 sowie der Information über die Anordnung der Fahrleitung 45, 50 eine Kraftfahrzeugposition 255. Dazu kann vorteilhafterweise die Steuereinrichtung 135 ein Map-Matching-Verfahren verwenden, um in einem ersten Teilschritt die Ortsposition 250 einem Fahrbahnabschnitt 260 der Fahrbahn 25 zuzuordnen, wobei in einem zweiten Teilschritt aufgrund der ermittelten Relativposition ebenso mittels eines Map-Matching-Verfahrens die Kraftfahrzeugposition 255 auf der Straße 24 ermittelt wird.

Die Bestimmung der Kraftfahrzeugposition 255 mittels des ersten Sensors 115 und der Ortsbestimmungseinrichtung 120 hat den Vorteil, dass die Fahrleitung 45, 50 auch bei schlechtem Wetter durch den ersten Sensor 115 detektiert werden kann.

Insbesondere kann bei starker Verschmutzung der Fahrbahn 25 und/oder bei Schneebelag auf der Fahrbahn 25 zuverlässig und exakt bis auf wenige Millimeter genau die Kraftfahrzeugposition 255 bestimmt werden.

Von besonderem Vorteil ist dabei, wenn die Steuereinrichtung 135 einen Versatz zwischen der Anordnung des ersten Sensors 115 und der Ortsbestimmungseinrichtung 120 mit bei der Bestimmung der Kraftfahrzeugposition 255 berücksichtigt.

Insbesondere ist hierbei denkbar, dass entgegen der in FIG 1 gezeigten Ausgestaltung des Kraftfahrzeugs 15 auch auf den Stromabnehmer 80 und/oder der Zentralrechner 200 und/oder die Datenverbindung 240 verzichtet wird. Dadurch eignet sich das in FIG 2 beschriebene Verfahren zur Bestimmung der Kraftfahrzeugposition 255 auch für Personenkraftwagen, insbesondere für Personenkraftwagen in konventioneller Bauweise.

In einen vierten Verfahrensschritt 315 berücksichtigt die Steuereinrichtung 135 die ermittelte Kraftfahrzeugposition 255 beispielsweise für eine Routenführung zu einem vordefinierten Ziel und/oder übergibt die ermittelte Kraftfahrzeugposition 255 dem weiteren Steuergerät für einen teilautonome oder autonome Fahrzeugführung des Kraftfahrzeugs 15.

Das Verfahren ist ähnlich zu dem in den FIG 2 beschrieben Verfahren ausgebildet.

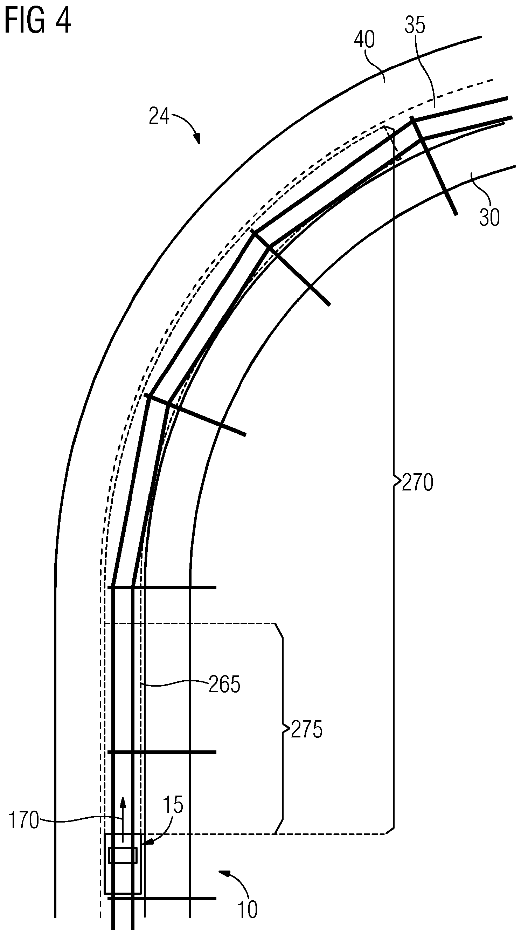

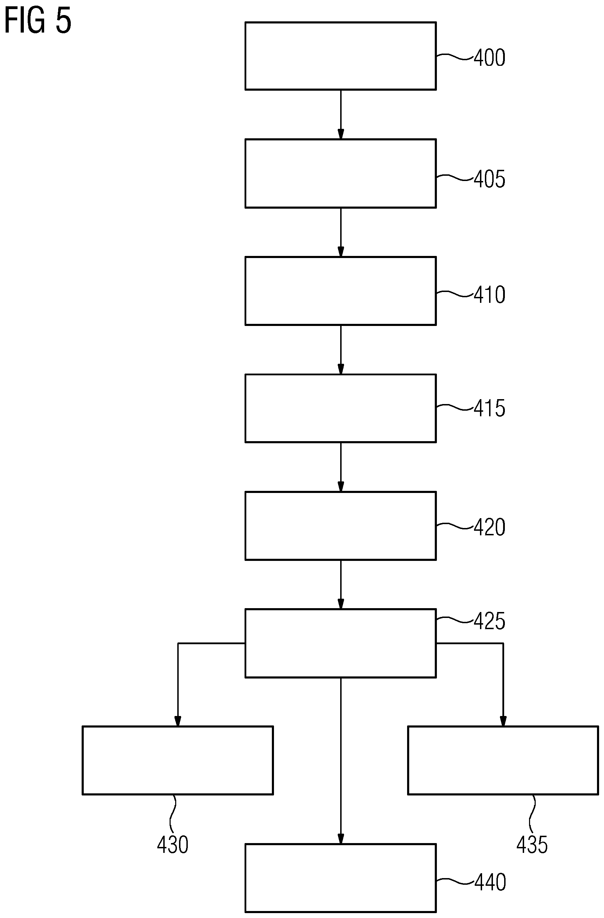

FIG 4 zeigt eine Draufsicht auf das in FIG 1 gezeigte System 10 gemäß einer zweiten Ausführungsform. FIG 5 zeigt Ablaufdiagramm eines Verfahrens gemäß einer zweiten Ausführungsform zum Betrieb des Kraftfahrzeugs 15 des in FIG 4 gezeigten Systems 10.

Das Verfahren weist einen ersten bis dritten Verfahrensschritt 400, 405, 410 auf. Der erste bis dritte Verfahrensschritt 400, 405, 410 sind beispielhaft identisch zu dem in FIG 2 erläuterten ersten bis dritten Verfahrensschritt 300, 305, 310 ausgebildet.

In einem vierten Verfahrensschritt 415 ermittelt der zweite Sensor 160 die Trajektorie 170 des Kraftfahrzeugs 15. Der zweite Sensor 160 stellt die ermittelte Trajektorie 170 der Steuereinrichtung 135 bereit, die diese erfasst. Die Trajektorie 170 legt die Steuereinrichtung 135 ggf. im Datenspeicher 125 ab.

In einem fünften Verfahrensschritt 420 ermittelt die Steuereinrichtung 135 auf Grundlage der Information der Anordnung der Fahrleitung 45, 50 sowie der Breite b₁, b₂ der Schleifleiste 100, 105 einen Fahrkanal 265 für das Kraftfahrzeug 15 für einen vordefinierten ersten Abschnitt 270 der Straße 24 vor dem Kraftfahrzeug 15. Der Fahrkanal 265 bildet dabei einen Bereich ab, in dem das Kraftfahrzeug 15 fahren kann, ohne die Fahrspur 35, 40 zu verlassen und die Schleifleisten 100, 105 an der Fahrleitung 45, 50 anliegen. Von besonderem Vorteil ist, wenn die Steuereinrichtung 135 bei der Ermittlung des Fahrkanals 265 zusätzlich einen Verlauf der Fahrbahn 25, insbesondere wenigstens einer Fahrspur 35, 40 bei der Ermittlung des Fahrkanals 265 berücksichtigt. Der Fahrkanal 265 ist in FIG 3 strichliert symbolisch dargestellt.

Der Fahrkanal 265 wird vor dem Kraftfahrzeug 15 für einen vorbestimmten ersten Abschnitt 270 der Straße, der größer ist als ein Abtastbereich des ersten Sensors 115, vorzugsweise für einen Bereich von mehreren 100 Metern vor dem Kraftfahrzeug, 15 errechnet.

Im Fahrkanal 265 ist sichergestellt, dass jede der Schleifleisten 100, 105 einen zuverlässigen Berührkontakt mit der jeweils zugeordneten Fahrleitung 45, 50 aufweist. Durch die Berücksichtigung der Fahrspur 30, 35, 40 wird sichergestellt, dass der Fahrkanal 265 innerhalb einer einzigen Fahrspur 35, 40 verläuft und ggf. ein Überschreiten des Fahrkanals 265 hin zur Standspur 30 oder ein gleichzeitiges Befahren beider Fahrspuren 35, 40 vermieden werden kann.

In einem sechsten Verfahrensschritt 425 vergleicht die Steuereinrichtung 135 die ermittelte Trajektorie 170 mit einem vordefinierten zweiten Abschnitt 275 des Fahrkanals 265. Der zweite Abschnitt 275 liegt direkt vor dem Kraftfahrzeug 15. Der zweite Abschnitt 275 ist dabei deutlich größer als der Abtastbereich des ersten Sensors 115, aber auch kleiner als der ermittelte Fahrkanal 265.

In Abhängigkeit des Vergleichs fährt die Steuereinrichtung 135 mit einem siebten Verfahrensschritt 430 oder einem achten Verfahrensschritt 435 fort.

Ermittelt die Steuereinrichtung 135 beispielsweise, wie in FIG 5 gezeigt, im Vergleich, dass das Kraftfahrzeug 15 mit der im vierten Verfahrensschritt 415 ermittelten Trajektorie 170 den zweiten Abschnitt 275 des Fahrkanals 265 mit der bestehenden Trajektorie 170 nicht verlassen wird, so stellt die Steuereinrichtung 135 im siebten Verfahrensschritt 430 ein erstes Steuersignal der Anzeigeeinrichtung 175 bereit. Mit dem ersten Steuersignal steuert die Steuereinrichtung 130 die Anzeigeeinrichtung 175 derart an, dass keines der Anzeigeelemente 180, 185 aktiviert wird.

Ermittelt die Steuereinrichtung 135 im Vergleich, dass das Kraftfahrzeug 15 mit der im vierten Verfahrensschritt 415 ermittelten Trajektorie 170 den zweiten Abschnitt 275 des Fahrkanals 265 mit der bestehenden Trajektorie 170 verlassen wird, so stellt die Steuereinrichtung 135 im achten Verfahrensschritt 435 ein zweites Steuersignal der Anzeigeeinrichtung 175 bereit. Mit dem zweiten Steuersignal steuert die Steuereinrichtung 130 die Anzeigeeinrichtung 175 derart an, dass beispielsweise auf der Seite, auf der das Kraftfahrzeug 15 den zweiten Abschnitt 275 des Fahrkanal 265 verlassen wird, das entsprechend angeordnete Anzeigeelement 180, 185 aktiviert wird.

Auf diese Weise kann ein angenehmes Fahrgefühl für den Fahrzeugführer bereitgestellt werden, ohne dass der Fahrzeugführer konsequent sowohl die Fahrbahn 25 als auch die Fahrleitung 45, 50 im Auge halten muss, um einen fortwährenden Kontakt der Schleifleiste 100, 105 mit der Fahrleitung 45, 50 sicherzustellen.

Ist das Kraftfahrzeug 15 als autonomes Kraftfahrzeug ausgebildet so kann die Information des Ergebnisses des Vergleichs an das weitere Steuergerät für das autonome Fahren übergeben werden, das die Information für die Steuerung des Kraftfahrzeugs 15 berücksichtigt.

Ferner ist von Vorteil, wenn die Regelstrecke 97 beispielsweise durch die Steuereinrichtung 135 ausgebildet ist, wobei für die Regelstrecke 97 in einem neunten Verfahrensschritt 440 als Sollwert der zweite Abschnitt 275 zugeführt wird und die Steuereinrichtung 135 auf Grundlage eines Istwerts des Aktuators 85, 90 und/oder eines Istwerts der relativen Ausrichtung der Schleifleiste 100, 105 zu der Fahrleitung 45, 50 den Aktuator ansteuern. Dabei kann die Steuereinrichtung 135 sowohl einen vertikalen Versatz und/oder einen horizontalen Versatz der Fahrleitung 45, 50 zu der Kraftfahrzeugposition berücksichtigen.

Durch Aktivieren der Anzeigeelemente 180, 185 kann der Fahrzeugführer frühzeitig Kursänderungen vornehmen, sodass die Schleifleisten 100, 105 immer günstig zu der jeweils zugeordneten Fahrleitung 45, 50 angeordnet sind. Ferner wird dadurch vermieden, dass der Aktor 85, 90 aufgrund des eingeschränkten Abtastbereichs des ersten Sensors 115 in besonders kurzen Zeiträumen, insbesondere im Bereich von wenigen Millisekunden, die Anordnung der Schleifleiste 100, 105 relativ zum Kraftfahrzeug 15, aber auch zur Fahrleitung 45, 50 verändern muss.

Dadurch, dass für die Regelstrecke 97 der zweite Abschnitt 275 des Fahrkanals 265 mitberücksichtigt werden kann, wird ein Horizont für die Regelstrecke 97 gegenüber dem Abtastbereich des Sensors 115 erweitert, sodass der Aktor 85, 90 mit geringerer Verfahrgeschwindigkeit und mit geringeren Beschleunigungen die Schleifleiste 100, 105 verstellen kann. Dadurch sind die auf die Tragestruktur 95 wirkenden Kräfte und Beschleunigungen reduziert. Auch kann eine Leistung des Aktors 85, 90 gegenüber derzeitigen Aktoren verringert werden. Insbesondere kann dadurch der Stromabnehmer 80 besonders leicht und kostengünstig ausgebildet werden.

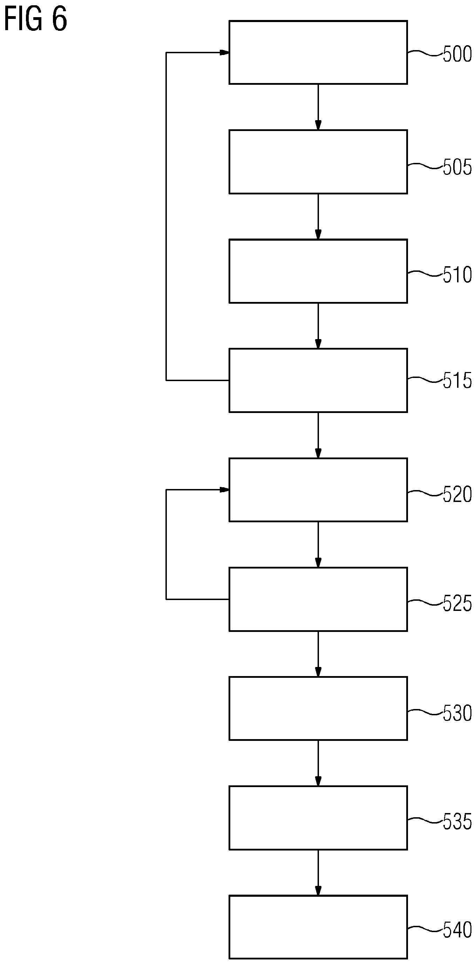

FIG 6 zeigt ein Ablaufdiagramm eines Verfahrens gemäß einer dritten Ausführungsform zum Betrieb des in FIG 7 gezeigten Systems 10. FIG 7 zeigt eine Draufsicht auf eine Variante des in FIG 1 gezeigten Systems 10.

Das System 10 ist ähnlich zu dem in FIGN 1 und 5 gezeigten System 10 ausgebildet. Abweichend dazu sind auf der Fahrbahn 25 ein erstes Kraftfahrzeug 15 und wenigstens ein zweites Kraftfahrzeug 16 angeordnet. Die Kraftfahrzeuge 15, 16 sind wie in FIG 1 ausgebildet und können den Stromabnehmer 80 aufweisen. Die Kraftfahrzeuge 15 sind jeweils über eine separate Datenverbindung 240 mit der Zentralrechnerdatenschnittstelle 215 verbunden. Die Datenverbindung 240 zwischen den einzelnen Kraftfahrzeugen 15 kann temporär abwechselnd oder gleichzeitig bestehen.

Im Betrieb des Systems 10 führt das erste Kraftfahrzeug 15 einen ersten bis dritten Verfahrensschritt 500, 505, 510 durch. Der erste bis dritte Verfahrensschritt 500, 505, 510 sind identisch zu dem in FIG 2 beschriebenen ersten bis dritten Verfahrensschritt 300, 305, 310.

In einem vierten Verfahrensschritt 515 speichert die Steuereinrichtung 135 des ersten Kraftfahrzeugs 15 die Relativposition der Anordnung der Fahrleitung 45, 50 zu dem ersten Sensor 115 in Verbindung mit der ermittelten Ortsposition 250 im Datenspeicher 125 des ersten Kraftfahrzeugs 15 ab.

Der erste bis vierte Verfahrensschritt 500, 505, 510, 515 werden vorzugsweise fortlaufend in einer Schleife wiederholt durchgeführt, wobei die Information über die Ortsposition 250 und die Relativposition entlang einer Fahrstrecke 280 des Kraftfahrzeugs 15 gespeichert werden.

Der erste bis vierte Verfahrensschritt 500 bis 515 wird vom weiteren Kraftfahrzeug 16 ebenso durchgeführt.

Nach Ablauf eines vordefinierten Zeitintervalls und/oder eines Abfragesignals des Zentralrechners 200, bereitgestellt durch die Datenverbindung 240, baut die Steuereinrichtung 135 des ersten Kraftfahrzeugs 15 in einem fünften Verfahrensschritt 520 über die Datenverbindung 240 die gesammelten Informationen über Ortspositionen 250 und jeweils zugeordneten Relativpositionen als erste Information des ersten Kraftfahrzeugs 15 an den Zentralrechner 200.

In einem sechsten Verfahrensschritt 525 erfasst die Zentralrechnerdatenschnittstelle 215 die gesendeten Informationen und leitet sie an die Zentralrecheneinrichtung 210 weiter. Die Zentralrecheneinrichtung 210 speichert im Zentraldatenspeicher 205 die erste Information ab.

Der fünfte und sechste Verfahrensschritt 520, 525 werden für das zweite Kraftfahrzeug 15, 16 wiederholt. Dabei speichert die Zentralrecheneinrichtung 210 jeweils eine zweite Information des zweiten Kraftfahrzeugs 16 im Zentraldatenspeicher 205 ab.

In einem siebten Verfahrensschritt 530 ermittelt die Zentralrecheneinrichtung 210 auf Grundlage der im Zentraldatenspeicher 205 abgelegten ersten und zweiten Informationen über die Relativposition in Verbindung mit der Ortsposition 250 der Kraftfahrzeuge 15 sowie des vordefinierten Parameters eine Information über eine aktualisierte Anordnung der Fahrleitung 45, 50.

In einem achten Verfahrensschritt 535 speichert die Zentralrecheneinrichtung 210 die aktualisierte Information über die aktualisierte Anordnung der Fahrleitung 45, 50 im Zentraldatenspeicher 205 ab.

In einem neunten Verfahrensschritt 540 wird mittels eines weiteren Datensignals die Information über die aktualisierte Anordnung der Fahrleitung 45, 50 an das jeweilige Steuergerät 110 des Kraftfahrzeugs 15, 16 übertragen.

Der neunte Verfahrensschritt 540 wird für jedes Kraftfahrzeug 15, 16 wiederholt.

Die Steuereinrichtung 135 speichert die Information über die aktualisierte Anordnung der Fahrleitung 45, 50 im Datenspeicher 125 ab, vorzugsweise durch ein Überschreiben der im Datenspeicher 125 ursprünglich abgelegen Information über die Fahrleitung 45, 50.

Diese Ausgestaltung hat den Vorteil, dass auch Änderungen, insbesondere nach Wartungsarbeiten der Fahrleitung 45, 50, besonders erfasst werden und das Kraftfahrzeug 15 besonders schnell auf Grundlage der aktualisierten Anordnung betrieben werden kann. Insbesondere in Verbindung mit dem in FIGN 4 und 6 beschriebenen Verfahren kann ein zuverlässiger elektrischer Kontakt der Schleifleiste 100, 105 an der Fahrleitung 45, 50 sichergestellt werden. Auch wird ein gleichmäßiger Verschleiß der Schleifleiste 100, 105 sichergestellt.

Ferner wird durch die Kombination des in FIG 4 beschriebenen Verfahrens mit dem in FIG 6 beschrieben Verfahrens eine besonders exakte Führung der Schleifleiste 100, 105 sowohl in Horizontal- als auch in Vertikalrichtung sichergestellt. Ferner können mögliche Beschädigungen des Aktors 85, 90 oder der Tragestruktur 95 und/oder der Schleifleiste 100, 105 vermieden werden.

Durch das in FIG 6 beschriebene Verfahren kann eine bis auf wenige millimetergenaue Information, vorzugsweise eine topographische Karte der Fahrleitung 45, 50, zur Verfügung steht.

Durch eine Kombination der in FIGN 3 und 6 beschriebenen Verfahren kann die Kraftfahrzeugposition 255 bis auf wenige Millimeter genau bestimmt werden.
Es wird darauf hingewiesen, dass zusätzlich selbstverständlich auch weitere Sensoren vorgesehen sein können. Insbesondere ist hierbei denkbar, dass der Steuereinrichtung 135 Informationen aus einem Fahrspurerkennungssystem bereitgestellt werden, um so besonders zuverlässig die Anordnung der Fahrleitung 45, 50 relativ zur Fahrspur 30, 35 zu ermitteln.

Zusätzlich ist auch denkbar, dass das System 10 an regelmäßigen definierten Stellen der Markierungen untergebracht werden, die durch eine entsprechende fahrzeugseitige Sensorik erfasst werden und dazu genutzt werden, die ermittelte Kraftfahrzeugposition 255 an diesen vordefinierten Positionen zu eichen.

In einer weiteren Ausführungsform des in den FIGN 5 und 7 gezeigten Systems 10 ist auch denkbar, dass aufgrund der erfassten Anordnung der Fahrleitung 45, 50 ein Verschleiß und/oder eine Beschädigung durch einen Vergleich der aktualisierten Anordnung mit der ursprünglich belegten im Datenspeicher 125 abgelegten Anordnung der Fahrleitung 45, 50 verglichen wird und dass bei Abweichung der aktualisierten Anordnung der Fahrleitung 45, 50 zu der ursprünglichen Anordnung der Fahrleitung 45, 50 ein Schaden der Fahrleitung 45, 50 erfasst wird. Dies ist insbesondere bei einer zu großen seitlichen Abweichung der Fahrleitung 45, 50 von der ursprünglichen Anordnung der Fahrleitung 45, 50, beispielsweise durch eine Beschädigung der Halteeinrichtung 55, auf einfache Weise zu erfassen.

Durch die oben beschriebene Ausgestaltung des Systems 10 kann bei schlechten Wetterbedingungen zuverlässig und besonders genau die Position des Kraftfahrzeugs 15 detektiert werden.

Ferner kann der erste Sensor 115 in gut geschützter Position nahe an der Fahrleitung 45, 50, beispielsweise an einem Trägergestell für die Tragestruktur 95, befestigt werden und so eine zuverlässige Erfassung der der Fahrleitung 45, 50 sichergestellt werden.

## Patentansprüche

1. Kraftfahrzeug (15, 16),
aufweisend ein Steuergerät (110), einen ersten Sensor (115) und eine Ortsbestimmungseinrichtung (120),
wobei das Steuergerät (110) eine Steuereinrichtung (135) und einen Datenspeicher (125) umfasst,
wobei in dem Datenspeicher (125) wenigstens eine Information über eine Anordnung einer Fahrleitung (45, 50) abgelegt ist, wobei die Steuereinrichtung (135) mit dem ersten Sensor (115) und mit der Ortsbestimmungseinrichtung (120) verbunden ist, wobei der erste Sensor (115) eine Relativposition der Fahrleitung (45, 50) zu dem Kraftfahrzeug (15, 16) bestimmt und die Relativposition der Steuereinrichtung (135) bereitstellt, wobei die Ortsbestimmungseinrichtung (120) eine Ortsposition (250) des Kraftfahrzeugs (15, 16) auf Grundlage von Datensignale von verschiedenen Satelliten erfassen und auf Grundlage der erfassten Datensignale die Ortsposition (250) des Kraftfahrzeugs (15) errechnet und die Ortsposition der Steuereinrichtung (135) bereitstellt,
aufweisend einen Stromabnehmer (80) mit wenigstens einer Schleifleiste (100, 105), wenigstens einem Aktor (85, 90) und einer Tragestruktur (95),
wobei der Aktor (85, 90) mit der Tragestruktur (95) gekoppelt ist,
wobei die Tragestruktur (95) die Schleifleiste (100, 105) trägt und ausgebildet ist, die Schleifleiste (100, 105) in Berührkontakt mit der Fahrleitung (45, 50) zu bringen,
wobei der Aktor (85, 90) mit der Steuereinrichtung (135) verbunden ist,
wobei der Aktor (85, 90) mit der Tragestruktur (95) mechanisch gekoppelt und ausgebildet ist, eine Schleifleistenposition zu verändern,
wobei die Steuereinrichtung (135) eine Regelstrecke (97) aufweist,
wobei das Kraftfahrzeug einen mit der Steuereinrichtung (135) verbundenen zweiten Sensor (160) aufweist,
**dadurch gekennzeichnet, dass**
die Steuereinrichtung (135) auf Grundlage der ermittelten Relativposition, der ermittelten Ortsposition (250) und der Information über die Anordnung der Fahrleitung (45, 50) eine Kraftfahrzeugposition (255) errechnet,
wobei der zweite Sensor (160) eine Trajektorie (170) des Kraftfahrzeugs (15, 16) ermittelt und die ermittelte Trajektorie (170) der Steuereinrichtung (135) bereitstellt, wobei die Steuereinrichtung (135) auf Grundlage der Kraftfahrzeugposition (255) und der Anordnung der Fahrleitung (45, 50) einen Fahrkanal (265) errechnet, wobei der Fahrkanal (265) einen Bereich abbildet, in dem das Kraftfahrzeug (15) fahren kann ohne die Fahrspur (35, 40) einer Straße (24) zu verlassen und die Schleifleisten (100, 105) an der Fahrleitung (45, 50) anliegen,
wobei die Steuereinrichtung (135) den Fahrkanal (265) mit der Trajektorie (170) in einem Vergleich vergleicht,
wobei in Abhängigkeit des Ergebnisses des Vergleichs die Steuereinrichtung (135) ein Steuersignal bereitstellt,
wobei der Regelstrecke (97) als Sollwert ein Abschnitt (275) des Fahrkanals (265) zugeführt wird,
wobei der Abschnitt (275) direkt vor dem Kraftfahrzeug (15) liegt,
wobei der Abschnitt (275) größer ist als ein Abtastbereich des ersten Sensors (115),
wobei die Regelstrecke (97) auf Grundlage eines Istwerts des Aktuators (85, 90) und/oder eines Istwerts der relativen Ausrichtung der Schleifleiste (100, 105) zu der Fahrleitung 45, 50 den Aktuator (85, 90) mittels eines weiteren Steuersignals ansteuert.

2. Kraftfahrzeug (15, 16) nach Anspruch 1,
aufweisend eine Anzeigeeinrichtung (175),
wobei die Anzeigeeinrichtung (175) mit der Steuereinrichtung (135) verbunden ist,
wobei die Steuereinrichtung (135) mittels des Steuersignals die Anzeigeeinrichtung (175) derart ansteuert, dass die Anzeigeeinrichtung (175) eine Fahrrichtung für einen Fahrzeugführer des Kraftfahrzeugs (15, 16) anzeigt.

3. Kraftfahrzeug (15, 16) nach Anspruch 1 oder 2,
wobei die Steuereinrichtung (135) bei der Ermittlung des weiteren Steuersignals für den Aktor (85, 90), das Ergebnis des Vergleichs zu berücksichtigt.

4. Kraftfahrzeug (15, 16) nach einem der vorhergehenden Ansprüche,
wobei die Steuereinrichtung (135) eine Breite (b1, b2) der Schleifleiste (100, 105) und/oder eine Breite (b1, b2) eines Schwenkbereichs der Schleifleiste (100, 105) quer zu einer Fahrzeuglängsachse bei der Ermittlung des Fahrkanals (265) berücksichtigt.

5. Kraftfahrzeug (15, 16) nach einem der vorhergehenden Ansprüche,
aufweisend eine Datenschnittstelle (230),
wobei die Datenschnittstelle (230) mit der Steuereinrichtung (135) verbunden ist und mit einem Zentralrechner (200) verbindbar ist,
wobei die Steuereinrichtung (135) ausbildet ist, eine erste Information des ersten Sensors (115) in Verbindung mit einer zweiten Information über eine Ortsposition (250) des Kraftfahrzeugs (15, 16) im Datenspeicher (125) abzuspeichern, wobei die Steuereinrichtung (135) ausgebildet ist, nach einem vordefinierten Zeitintervall ein Datensignal mit der ersten Information in Verbindung mit der zweiten Information an der Datenschnittstelle (230) bereitzustellen.

6. Kraftfahrzeug (15, 16) nach Anspruch 5,
wobei die Datenschnittstelle (230) ausgebildet ist, ein Zentralrechnerdatensignal eines Zentralrechners (200) zu erfassen,
wobei die Datenschnittstelle (230) ausgebildet ist, das Zentralrechnerdatensignal der Steuereinrichtung (135) bereitzustellen,
wobei das Zentralrechnerdatensignal eine weitere Information über eine aktualisierte Anordnung der Fahrleitung (45, 50) aufweist,
wobei die Steuereinrichtung (135) ausgebildet ist, die im Datenspeicher (125) abgelegte Information über die Anordnung der Fahrleitung (45, 50) durch die weitere Information über die aktualisierte Anordnung der Fahrleitung (45, 50) zu ersetzten und/oder zu ergänzen.

7. System (10),
aufweisend ein erstes Kraftfahrzeug (15), wenigstens ein zweites Kraftfahrzeug (16) und einen Zentralrechner (200), wobei das erste Kraftfahrzeug (15, 16) und das zweite Kraftfahrzeug (16) nach Anspruch 5 oder 6 ausgebildet sind,
wobei der Zentralrechner (200) eine Zentralrechnerdatenschnittstelle (215), eine Zentralrecheneinrichtung (210) und einen Zentraldatenspeicher (205) aufweist,
wobei der Zentraldatenspeicher (205) mit der Zentralrecheneinrichtung (210) und die Zentralrechnerdatenschnittstelle (215) mit der Zentralrecheneinrichtung (210) verbunden ist, wobei im Zentraldatenspeicher (205) ein vordefinierter Parameter abgelegt ist,
wobei die Zentralrechnerdatenschnittstelle (215) mittels eines Datensignals mit der Datenschnittstelle (230) des ersten Kraftfahrzeugs (15) und mittels eines weiteren Datensignals mit der Datenschnittstelle (230) des zweiten Kraftfahrzeugs (16) verbunden ist,
wobei das Datensignal des ersten Kraftfahrzeugs (15, 16) die erste Information des ersten Sensors (115) des ersten Kraftfahrzeugs(15) in Verbindung mit der zweiten Information über die Ortsposition (250) des ersten Kraftfahrzeugs (15) und das weitere Datensignal des zweiten Kraftfahrzeugs (16) die erste Information des ersten Sensors (115) des zweiten Kraftfahrzeugs (16) in Verbindung mit der zweiten Information über die Ortsposition (250) des zweiten Kraftfahrzeugs (16) bereitstellt,
wobei die Zentraldatenschnittstelle (215) ausgebildet ist, das Datensignal des ersten Kraftfahrzeugs (15) und des zweiten Kraftfahrzeugs (16) zu erfassen und der Zentralrecheneinrichtung (210) bereitzustellen,
wobei die Zentralrecheneinrichtung (210) ausgebildet ist, auf Grundlage der ersten Information und der zweiten Information des ersten Kraftfahrzeugs (15) und der ersten Information und der zweiten Information des zweiten Kraftfahrzeugs (16) sowie des vordefinierten Parameters eine Information über eine aktualisierte Anordnung (45, 50) der Fahrleitung zu errechnen.

8. System (10) nach Anspruch 7,
wobei die Zentralrechnerdatenschnittstelle (215) ausgebildet ist, ein Zentraldatensignal mit der Information über die aktualisierte Anordnung der Fahrleitung (45,50) bereitzustellen,
wobei die Datenschnittstelle (230) des ersten Kraftfahrzeugs (15) und/oder des zweiten Kraftfahrzeugs (16) ausgebildet ist, das Zentraldatensignal zu erfassen.

9. Verfahren zum Betrieb eines Kraftfahrzeugs (15, 16) nach einem der Ansprüche 1 bis 6,
wobei der erste Sensor (115) eine Relativposition der Fahrleitung (45, 50) zu dem Kraftfahrzeug (15, 16) bestimmt und der Steuereinrichtung (135) die Relativposition bereitstellt, wobei die Ortsbestimmungseinrichtung (120) eine Ortsposition (250) des Kraftfahrzeugs (15, 16) auf Grundlage einer Erfassung von Datensignale von verschiedenen Satelliten und auf Grundlage der erfassten Datensignale eine Ortsposition (250) des Kraftfahrzeugs (15) errechnet und die Ortsposition (250) der Steuereinrichtung (135) bereitstellt,
wobei die Steuereinrichtung (135) auf Grundlage der ermittelten Relativposition, der ermittelten Ortsposition (250) und der Information über die Anordnung der Fahrleitung (45, 50) eine Kraftfahrzeugposition (255) errechnet
wobei der zweite Sensor (160) eine Trajektorie (170) des Kraftfahrzeugs (15, 16) ermittelt und der Steuereinrichtung (135) die Trajektorie (170) bereitstellt,
wobei die Steuereinrichtung (135) auf Grundlage der Kraftfahrzeugposition (255) und der Anordnung der Fahrleitung (45, 50) einen Fahrkanal (265) errechnet,
wobei der Fahrkanal (265) einen Bereich abbildet, in dem das Kraftfahrzeug (15) fahren kann ohne die Fahrspur (35, 40) einer Straße (24) zu verlassen und die Schleifleisten (100, 105) an der Fahrleitung (45, 50) anliegen,
wobei die Steuereinrichtung (135) den Fahrkanal (265) mit der Trajektorie (170) in einem Vergleich vergleicht, wobei in Abhängigkeit des Ergebnisses des Vergleichs ein Steuersignal bereitstellt wird,
wobei der Regelstrecke (97) als Sollwert ein Abschnitt (275) des Fahrkanals (265) zugeführt wird,
wobei der Abschnitt (275) direkt vor dem Kraftfahrzeug (15) liegt,
wobei der Abschnitt (275) größer ist als ein Abtastbereich des ersten Sensors (115),
wobei die Regelstrecke (97) auf Grundlage eines Istwerts des Aktuators (85, 90) und/oder eines Istwerts der relativen Ausrichtung der Schleifleiste (100, 105) zu der Fahrleitung (45, 50) den Aktuator (85, 90) mittels eines weiteren Steuersignals ansteuert.

10. Verfahren nach Anspruch 9,
wobei die Steuereinrichtung (135) mittels des Steuersignals die Anzeigeeinrichtung (175) derart ansteuert, dass die Anzeigeeinrichtung (175) eine Fahrrichtung für einen Fahrzeugführer des Kraftfahrzeugs (15, 16) anzeigt.

## Claims

1. Motor vehicle (15, 16),
having a control device (110), a first sensor (115) and a global positioning device (120),
wherein the control device (110) comprises a control unit (135) and a data memory (125),
wherein at least one item of information about an arrangement of an overhead line (45, 50) is stored in the data memory (125),
wherein the control unit (135) is connected to the first sensor (115) and to the global positioning device (120), wherein the first sensor (115) determines a position of the overhead line (45, 50) relative to the motor vehicle (15, 16) and provides the control unit (135) with the relative position,
wherein the global positioning device (120) acquires a global position (250) of the motor vehicle (15, 16) on the basis of data signals from different satellites and, on the basis of the acquired data signals, calculates a global position (250) of the motor vehicle (15) and provides the control unit (135) with the global position,
having a current collector (80) with at least one contact strip (100, 105), at least one actuator (85, 90) and a supporting structure (95),
wherein the actuator (85, 90) is coupled to the supporting structure (95),
wherein the supporting structure (95) bears the contact strip (100, 105) and is embodied to bring the contact strip (100, 105) into touching contact with the overhead line (45, 50),
wherein the actuator (85, 90) is connected to the control unit (135),
wherein the actuator (85, 90) is mechanically coupled to the supporting structure (95) and is embodied to alter a contact strip position,
wherein the control unit (135) has a closed-loop control path (97),
wherein the motor vehicle has a second sensor (160) connected to the control unit (135),
**characterised in that**
the control unit (135), on the basis of the established relative position, the established global position (250) and the information about the arrangement of the overhead line (45, 50), calculates a position of the motor vehicle (255), wherein the second sensor (160) establishes a trajectory (170) of the motor vehicle (15, 16) and provides the control unit (135) with the established trajectory (170), wherein the control unit (135), on the basis of the position of the motor vehicle (255) and the arrangement of the overhead line (45, 50), calculates a driving channel (265), wherein the driving channel (265) maps an area, in which the motor vehicle (15) can drive without departing from the lane (35, 40) of a road (24) and the contact strips (100, 105) are in contact with the overhead line (45, 50),
wherein the control unit (135) compares the driving channel (265) with the trajectory (170) in a comparison,
wherein, depending on the result of the comparison, the control unit (135) provides a control signal,
wherein the closed-loop control path (97) is supplied with a section (275) of the driving channel (265) as a setpoint value,
wherein the section (275) lies directly in front of the motor vehicle (15),
wherein the section (275) is larger than a scanning range of the first sensor (115),
wherein the closed-loop control path (97), on the basis of an actual value of the actuator (85, 90) and/or an actual value of the alignment of the contact strip (100, 105) relative to the overhead line (45, 50) activates the actuator (85, 90) by means of a further control signal.

2. Motor vehicle (15, 16) according to claim 1,
having a display device (175),
wherein the display device (175) is connected to the control unit (135),
wherein the control unit (135) activates the display device (175) by means of the control signal such that the display device (175) displays a driving direction for a driver of the motor vehicle (15, 16).

3. Motor vehicle (15, 16) according to claim 1 or 2,
wherein the control unit (135), when establishing the further control signal for the actuator (85, 90), takes account of the result of the comparison.

4. Motor vehicle (15, 16) according to one of the preceding claims,
wherein the control unit (135) takes account of a width (b1, b2) of the contact strip (100, 105) and/or a width (b1, b2) of a pivot range of the contact strip (100, 105) transverse to a longitudinal axis of the vehicle when establishing the driving channel (265).

5. Motor vehicle (15, 16) according to one of the preceding claims,
having a data interface (230),
wherein the data interface (230) is connected to the control unit (135) and is able to be connected to a central processor (200),
wherein the control unit (135) is embodied to store first information of the first sensor (115) in conjunction with second information about a global position (250) of the motor vehicle (15, 16) in the data memory (125),
wherein the control unit (135) is embodied, after a predefined time interval, to provide a data signal with the first information in conjunction with the second information at the data interface (230).

6. Motor vehicle (15, 16) according to claim 5,
wherein the data interface (230) is embodied to acquire a central processor data signal of a central processor (200), wherein the data interface (230) is embodied to provide the control unit (135) with the central processor data signal, wherein the central processor data signal has further information about an updated arrangement of the overhead line (45, 50),
wherein the control unit (135) is embodied to replace and/or to supplement the information about the arrangement of the overhead line (45, 50) stored in the data memory (125) by the further information about the updated arrangement of the overhead line (45, 50).

7. System (10),
having a first motor vehicle (15), at least one second motor vehicle (16) and a central processor (200),
wherein the first motor vehicle (15, 16) and the second motor vehicle (16) are embodied according to claim 5 or 6,
wherein the central processor (200) has a central processor data interface (215), a central processing device (210) and a central data memory (205),
wherein the central data memory (205) is connected to the central processing device (210) and the central processor data interface (215) is connected to the central processing device (210),
wherein a predefined parameter is stored in the central data memory (205),
wherein the central processor data interface (215) is connected by means of a data signal to the data interface (230) of the first motor vehicle (15) and by means of a further data signal to the data interface (230) of the second motor vehicle (16),
wherein the data signal of the first motor vehicle (15, 16) provides the first information of the first sensor (115) of the first motor vehicle (15) in conjunction with the second information about the global position (250) of the first motor vehicle (15) and the further data signal of the second motor vehicle (16) provides the first information of the first sensor (115) of the second motor vehicle (16) in conjunction with the second information about the global position (250) of the second motor vehicle (16),
wherein the central data interface (215) is embodied to acquire the data signal of the first motor vehicle (15) and of the second motor vehicle (16) and to provide the central processing device (210) with it,
wherein the central processing device (210) is embodied, on the basis of the first information and the second information of the first motor vehicle (15) and the first information and the second information of the second motor vehicle (16) as well as the predefined parameter, to calculate information about an updated arrangement (45, 50) of the overhead line.

8. System (10) according to claim 7,
wherein the central processor data interface (215) is embodied to provide a central data signal with the information about the updated arrangement of the overhead line (45,50),
wherein the data interface (230) of the first motor vehicle (15) and/or of the second motor vehicle (16) is embodied to acquire the central data signal.

9. Method for operation of a motor vehicle (15, 16) according to one of claims 1 to 6,
wherein the first sensor (115) determines a position of the overhead line (45, 50) relative to the motor vehicle (15, 16) and provides the control unit (135) with the relative position,
wherein the global positioning device (120) calculates a global position (250) of the motor vehicle (15, 16) on the basis of an acquisition of data signals of different satellites and on the basis of the acquired data signals, calculates a global position (250) of the motor vehicle (15) and provides the control unit (135) with the global position (250),
wherein the control unit (135), on the basis of the established relative position, the established global position (250) and the information about the arrangement of the overhead line (45, 50), calculates a position of the motor vehicle (255)
wherein the second sensor (160) establishes a trajectory (170) of the motor vehicle (15, 16) and provides the control unit (135) with the trajectory (170),
wherein the control unit (135), on the basis of the position of the motor vehicle (255) and the arrangement of the overhead line (45, 50), calculates a driving channel (265),
wherein the driving channel (265) maps an area in which the motor vehicle (15) can drive without departing from the lane (35, 40) of a road (24) and the contact strips (100, 105) are in contact with the overhead line (45, 50),
wherein the control unit (135) compares the driving channel (265) with the trajectory (170) in a comparison, wherein a control signal is provided depending on the result of the comparison,
wherein the closed-loop control path (97) is supplied with a section (275) of the driving channel (265) as a setpoint value,
wherein the section (275) lies directly in front of the motor vehicle (15),
wherein the section (275) is larger than a scanning range of the first sensor (115),
wherein the closed-loop control path (97), on the basis of an actual value of the actuator (85, 90) and/or an actual value of the alignment of the contact strip (100, 105) relative to the overhead line (45, 50) activates the actuator (85, 90) by means of a further control signal.

10. Method according to claim 9,
wherein the control unit (135) activates the display device (175) by means of the control signal such that the display device (175) displays a direction of travel for the driver of the motor vehicle (15, 16).

## Revendications

1. Véhicule (15, 16) automobile,
comprenant un appareil (110) de commande, un premier capteur (115) et un dispositif (120) de détermination de lieu,
dans lequel l'appareil (110) de commande comprend un dispositif (135) de commande et une mémoire (125) de données,
dans lequel au moins une information sur un agencement d'une caténaire (45, 50) est mise dans la mémoire (125) de données,
dans lequel le dispositif (135) de commande est relié au premier capteur (115) et au dispositif (120) de détermination de lieu,
dans lequel le premier capteur (115) détermine une position relative de la caténaire (45, 50) par rapport au véhicule (15, 16) automobile et fournit la position relative au dispositif (135) de commande,
dans lequel le dispositif (120) de détermination de lieu relève une position (250) dans l'espace du véhicule (15, 16) automobile sur la base de signaux de données de divers satellites et, sur la base des signaux de données relevés, calcule la position (250) dans l'espace du véhicule (15) automobile et fournit la position dans l'espace du dispositif (135) de commande,
comprenant un appareil (80) de prise de courant ayant au moins une bande (100, 105) de frottement, au moins un actionneur (85, 90) et une structure (95) porteuse,
dans lequel l'actionneur (85, 90) est accouplé à la structure (95) porteuse,
dans lequel la structure (95) porteuse porte la bande (100, 105) de frottement et est constituée pour mettre la bande (100, 105) de frottement en contact de toucher avec la caténaire (45, 50),
dans lequel l'actionneur (85, 90) est relié au dispositif (135) de commande,
dans lequel l'actionneur (85, 90) est accouplé mécaniquement à la structure (95) porteuse et est constitué pour modifier la position de la bande de frottement,
dans lequel le dispositif (135) de commande a un système (97) asservi,
dans lequel le véhicule automobile a un deuxième capteur (160) relié au dispositif (125) de commande,
**caractérisé en ce que**
le dispositif (135) de commande calcule une position (255) du véhicule automobile sur la base de la position relative qui a été déterminée, de la position (250) dans l'espace qui a été déterminée et de l'information sur l'agencement de la caténaire (45, 50),
dans lequel le deuxième capteur (160) détermine une trajectoire (170) du véhicule (15, 16) automobile et fournit la trajectoire (170) qui a été déterminée au dispositif (135) de commande, dans lequel le dispositif (135) de commande calcule un canal (265) de circulation sur la base de la position (255) du véhicule automobile et de l'agencement de la caténaire (45, 50), le canal (265) de circulation reproduisant une région, dans laquelle le véhicule (15) automobile peut circuler sans quitter la file (35, 40) de circulation d'une rue (24) et appliquer la bande (100, 105) de frottement à la caténaire (45, 50), dans lequel le dispositif (135) de commande compare, en une comparaison, le canal (265) de circulation à la trajectoire (170),
dans lequel, en fonction du résultat de la comparaison, le dispositif (135) de commande fournit un signal de commande, dans lequel il est envoyé au système (97) asservi, comme valeur de consigne, un tronçon (275) du canal (265) de circulation,
dans lequel le tronçon (275) se trouve directement devant le véhicule (15) automobile,
dans lequel le tronçon (275) est plus grand qu'une région de balayage du premier capteur (115),
dans lequel le système (97) asservi commande, sur la base d'une valeur réelle de l'actionneur (85, 90) et/ou d'une valeur réelle de l'orientation relative de la bande (100, 105) de frottement par rapport à la caténaire (45, 50), l'actionneur (85, 90) au moyen d'un autre signal de commande.

2. Véhicule (15, 16) automobile suivant la revendication 1, comprenant un dispositif (175) d'affichage,
dans lequel le dispositif (175) d'affichage est relié au dispositif (135) de commande,
dans lequel le dispositif (135) de commande commande, au moyen du signal de commande, le dispositif (175) d'affichage, de manière à ce que le dispositif (175) d'affichage indique une direction de circulation à un conducteur du véhicule (15, 16) automobile.

3. Véhicule (15, 16) automobile suivant la revendication 1 ou 2,
dans lequel le dispositif (135) de commande tient compte, lors de la détermination de l'autre signal de commande de l'actionneur (85, 90), du résultat de la comparaison.

4. Véhicule (15, 16) automobile suivant l'une des revendications précédentes,
dans lequel le dispositif (135) de commande tient compte, lors de la détermination du canal (265) de circulation, d'une largeur (b1, b2) de la bande (100, 105) de frottement et/ou d'une largeur (b1, b2) d'une région de pivotement de la bande (100, 105) de frottement transversalement à un axe longitudinal du véhicule.

5. Véhicule (15, 16) automobile suivant l'une des revendications précédentes,
comprenant une interface (230) de données,
dans lequel l'interface (230) de données est reliée au dispositif (135) de commande et peut être reliée à un ordinateur (200) central,
dans lequel le dispositif (135) de commande est constitué pour mettre, dans la mémoire (125) de données, une première information du premier capteur (115) en liaison avec une deuxième information sur une position (250) dans l'espace du véhicule (15, 16) automobile,
dans lequel le dispositif (135) de commande est constitué pour fournir, à l'interface (230) de données, après un intervalle de temps donné à l'avance, un signal de données ayant la première information en liaison avec la deuxième information.

6. Véhicule (15, 16) automobile suivant la revendication 5, dans lequel l'interface (230) de données est constituée pour détecter un signal d'un ordinateur (200) central,
dans lequel l'interface (230) de données est constituée pour fournir le signal de données de l'ordinateur central au dispositif (135) de commande,
dans lequel le signal de données de l'ordinateur central a une autre information sur un agencement mis à jour de la caténaire (45, 50),
dans lequel le dispositif (135) de commande est constitué pour remplacer et/ou compléter l'information mise dans la mémoire (125) de données sur l'agencement de la caténaire (45, 50) par l'autre information sur l'agencement mis à jour de la caténaire (45, 50).

7. Système (10),
comprenant un premier véhicule (15) automobile, au moins un deuxième véhicule (16) automobile et un ordinateur (200) central,
dans lequel le premier véhicule (15) et le deuxième véhicule (16) automobile sont constitués suivant la revendication 5 ou 6,
dans lequel l'ordinateur (200) central a une interface (215) de données d'ordinateur central, un dispositif (210) d'ordinateur central et une mémoire (205) de données centrale,
dans lequel la mémoire (205) de données centrale est reliée au dispositif (210) d'ordinateur central et l'interface (215) de données d'ordinateur central au dispositif (210) d'ordinateur central,
dans lequel un paramètre défini à l'avance est mis dans la mémoire (205) de données centrale,
dans lequel l'interface (215) de données d'ordinateur central est reliée, au moyen d'un signal de données, à l'interface (230) de données du premier véhicule (15) automobile et, au moyen d'un autre signal de données, à l'interface (230) de données du deuxième véhicule (16) automobile,
dans lequel le signal de données du premier véhicule (15) automobile fournit la première information du premier capteur (115) du premier véhicule (15) automobile en liaison avec la deuxième information sur la position (250) dans l'espace du premier véhicule (15) automobile et l'autre signal de données du deuxième véhicule (16) automobile, la première information du premier capteur (115) du deuxième véhicule (16) automobile en liaison avec la deuxième information sur la position (250) dans l'espace du deuxième véhicule (16) automobile,
dans lequel l'interface (215) de données centrale est constituée pour détecter le signal de données du premier véhicule (15) automobile et du deuxième véhicule (16) automobile et pour le fournir au dispositif (210) d'ordinateur central,
dans lequel le dispositif (210) d'ordinateur central est constitué pour, sur la base de la première information et de la deuxième information du premier véhicule (15) automobile et de la première information et de la deuxième information du deuxième véhicule (16) automobile, ainsi que du paramètre défini à l'avance, calculer une information sur un agencement (45, 50) mis à jour de la caténaire.

8. Système (10) suivant la revendication 7,
dans lequel l'interface (215) de données d'ordinateur central est constituée pour fournir le signal de données central avec l'information sur l'agencement mis à jour de la caténaire (45, 50),
dans lequel l'interface (230) de données du premier véhicule (15) automobile et/ou du deuxième véhicule (16) automobile est constituée pour détecter le signal de données central.

9. Procédé pour faire fonctionner un véhicule (15, 16) automobile suivant l'une des revendications 1 à 6,
dans lequel le premier capteur (115) détermine une position relative de la caténaire (45, 50) par rapport au véhicule (15, 16) automobile et fournit la position relative au dispositif (135) de commande,
dans lequel le dispositif (120) de détermination de lieu calcule une position (250) dans l'espace du véhicule (15, 16) automobile sur la base d'une détection de signaux de données de divers satellites et sur la base des signaux de données détectés et fournit la position (250) dans l'espace au dispositif (135) de commande,
dans lequel le dispositif (135) de commande calcule, sur la base de la position relative qui a été déterminée, de la position (250) dans l'espace qui a été déterminée et de l'information sur l'agencement de la caténaire (45, 50), une position (255) du véhicule automobile,
dans lequel le deuxième capteur (160) détermine une trajectoire (170) du véhicule (15, 16) automobile et fournit la trajectoire (170) au dispositif (135) de commande,
dans lequel le dispositif (135) de commande calcule un premier canal (265) de circulation sur la base de la position (255) du véhicule automobile et de l'agencement de la caténaire (45, 50),
dans lequel le canal (265) de circulation reproduit une région, dans laquelle le véhicule (15) automobile peut circuler sans quitter la file (35, 40) de circulation d'une rue (24) et appliquer les bandes (100, 105) de frottement à la caténaire (45, 50),
dans lequel le dispositif (135) de commande compare le canal (265) de circulation à la trajectoire (170) en une comparaison, dans lequel il est produit un signal de commande en fonction du résultat de la comparaison,
dans lequel on envoie, au système (97) asservi, comme valeur de consigne, un tronçon (275) du canal (265) de circulation,
dans lequel le tronçon (275) se trouve directement devant le véhicule (15) automobile,
dans lequel le tronçon (275) est plus grand qu'une plage de balayage du premier capteur (115),
dans lequel le système (97) asservi commande, sur la base d'une valeur réelle de l'actionneur (85, 90) et/ou d'une valeur réelle de l'orientation relative de la bande (100, 105) de frottement par rapport à la caténaire (45, 50), l'actionneur (85, 90) au moyen d'un autre signal de commande.

10. Procédé suivant la revendication 9,
dans lequel le dispositif (135) de commande commande le dispositif (175) d'affichage au moyen du signal de commande, de manière à ce que le dispositif (175) d'affichage affiche un sens de circulation pour un conducteur du véhicule (15, 16) automobile.
